# EUROPEAN PATENT APPLICATION

(11) **EP 4 430 946 A1**
(43) Date of publication of application: **18.09.2024**
(21) Application number: 24160882.7
(22) Date of filing: 01.03.2024
(51) Int. Cl.: A01K 89/033

(54) **TRIPLE LEVER DRAG SYSTEM**

(30) Priority: 03.03.2023 US 202363488391 P; 23.02.2024 US 202418585964
(71) Applicant: Pure Fishing, Inc., Spirit Lake, IA 51360 (US)
(72) Inventor: SVENSSON, Patrik, 37451 Asarum (SE); DISANTE, Rolland, Philadelphia, PA 19128 (US)
(74) Representative: Cabinet Beau de Loménie

(57) **Abstract**

A fishing reel (1) with a lever drag mechanism is provided. A lever on the drag mechanism may be rotated forward or backward to engage or disengage the drag mechanism respectively. When the lever is rotated forward to engage the drag mechanism, a shaft (15) may be pulled outwardly from the reel such that a plurality of drag washers (45, 50, 55) are placed into contact with a plurality of drag plates (60, 65). The drag washers may be coupled to a spool (10), and the drag plates may be coupled to a drag plate hub (115). As a result, when the drag mechanism is engaged, the drag washers may be frictionally coupled to the drag plates such that the spool is preferably coupled to the drag plate hub. When the drag mechanism is disengaged, the spool may rotate independently of the drag plate hub.

## Description

### Cross-Reference to Related Applications

This Application claims priority to U.S. Provisional Patent Application Serial No. 63/488,391, filed on March 3, 2023, entitled "TRIPLE LEVER DRAG SYSTEM," currently pending, to which the skilled person may refer when considering the present disclosure.

### Field of the Invention

The present invention relates generally to a drag mechanism for a fishing reel and more specifically to a pull-to-engage drag mechanism including a plurality of drag washers and drag plates.

### Background of the Invention

Conventional fishing reels include a drag mechanism for providing drag or resistance against rotation of the spool when tension is applied to the fishing line (e.g., by a fish). When the tension on the fishing line becomes too large for the fishing line to withstand, the drag mechanism allows the spool to rotate and the fish to pull fishing line from the reel. By allowing the fish to pull fishing line from the reel while the fishing line is under tension, the drag mechanism alleviates pressures on the fishing line, the rod, and the angler.

In a typical example, a carbon fiber drag washer is affixed to the spool, and a metal drag plate is affixed to the frame of the fishing reel. When the drag washer and the drag plate are placed into contact with one another (e.g., by a lever), friction is developed to resist rotation of the drag plate relative to the drag washer. Thus, the drag washer and the drag plate may be placed into contact with one another to develop resistance against rotation of the spool and playing out of line.

Typically and preferably, the level of drag or resistance is adjustable by the angler so that a level of drag appropriate to the circumstances may be obtained. For example, when casting, it may be desirable to obtain a maximum casting distance, and thus, it may be desirable to place the reel in a "free-spool" mode where there is little to no drag. When using live bait, a relatively low level of drag may be desirable to allow the live bait to swim and lure fish, but not to allow the live bait to sink. When a fish is hooked, a higher level of drag may be desirable to resist the fish swimming away. Moreover, the level of drag may be adjusted from time to time as the size of the fish is better estimated and/or as the fish grows tired.

To provide adjustable drag, many conventional reels utilize a lever drag mechanism which generally includes a rotatable lever and a calibration knob positioned on a side of the reel. When the lever is rotated forward in a first direction, the drag washer and the drag plate are moved up against one another, and a clamping pressure is applied to develop friction between the drag washer and the drag plate. The amount of clamping pressure applied between the drag washer and the drag plate can be selectively adjusted by rotating the calibration knob. Thus, the angler can selectively adjust the level of drag by rotating the calibration knob. Additionally, when the lever is rotated backward in a second direction, the drag washer and the drag plate are separated from one another. Thus, the angler may rotate the lever backward in the second direction to place the reel into a "free-spool" mode where the spool will rotate with minimal resistance.

While this arrangement provides adjustable drag, it includes a number of drawbacks. The conventional lever drag mechanism has one drag washer and one drag plate. Thus, in the conventional lever drag mechanism, there is usually only one interface at which to develop friction. To generate desirable levels of drag in the conventional lever drag mechanism, a relatively high frictional force is required at the single interface. This relatively high frictional force can cause the drag washer and drag plate to wear after repeated use. Additionally, because there is only one interface to provide drag, a relatively large clamping pressure between the drag washer and the drag plate may be required to generate the required friction. The relatively large clamping pressure between the drag washer and the drag plate can result in "sideload" making it burdensome to selectively reel in the fishing line via the spool.

Furthermore, known lever drag mechanisms are typically a "push-to-engage" design. In push-to-engage designs, as the lever is rotated forward to engage the drag mechanism, a shaft is translated axially inward. The shaft being pushed axially inwards places the drag washer into contact with the drag plate. However, push-to-engage drag mechanisms may be burdensome for the angler. For example, the angler may be susceptible to unintentionally pushing the shaft inward, thereby unintentionally engaging the drag mechanism.

Additionally, in push-to-engage drag mechanisms, repeated operation of the lever and ambient vibrations (e.g., from a boat) may cause "drag drift" where the calibration knob changes positions over time. As a result, in push-to-engage drag mechanisms, rotation of the lever may produce an inconsistent level of drag, and the angler may need to recalibrate the calibration knob from time to time. In contrast, for pull-to-engage drag mechanisms, U.S. Patent Application Serial No. 17/995,522 entitled "PULL TO TURN LEVER DRAG PRESET KNOB," the disclosure of which is incorporated herein by reference, describes a calibration knob that is less prone to drag drift.

Accordingly, there is a need for a drag mechanism that can develop drag at a greater number of interfaces than is provided by known drag mechanisms. In addition, it would be desirable that such a drag mechanism be a pull-to-engage lever drag mechanism that can allow the spool to spin freely when the shaft is selectively moved into the reel.

### Summary of the Invention

The present invention overcomes many of the shortcomings and limitations of the prior art devices discussed above. The invention described includes a drag mechanism to selectively prevent or resist rotation of a spool on a fishing reel. The drag mechanism includes a plurality of drag washers (e.g., an inner drag washer, a center drag washer, and an outer drag washer) affixed to the spool. When an angler rotates a lever on the fishing reel forward in a first direction, a shaft may translate axially outward from the frame of the fishing reel. The shaft being pulled axially outward preferably places the drag washers into contact with drag plates (e.g., an inner drag plate and an outer drag plate). The drag washers and the drag plates may apply pressure to one another to generate friction in the drag mechanism. As a result, the drag mechanism may resist rotation of the drag washers relative to the drag plates. Thus, because the drag washers may be affixed to the spool, the drag mechanism also preferably prevents or resists rotation of the spool. To disengage the drag mechanism and allow the spool to spin with minimal resistance, the lever may be rotated backward in a second direction to separate the drag washers from the drag plates.

These and other aspects and advantages of the present invention will become apparent to those skilled in the art after considering the following detailed description in connection with the accompanying drawings.

### Brief Description of the Drawings

Fig. 1 is a front cross-sectional view of a fishing reel with a drag mechanism constructed according to the teachings of the present invention, the drag mechanism in a disengaged position; and
Fig. 2 is a front cross-sectional view of the fishing reel of Fig. 1 with the drag mechanism in an engaged position.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

### Detailed Description of the Drawings

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

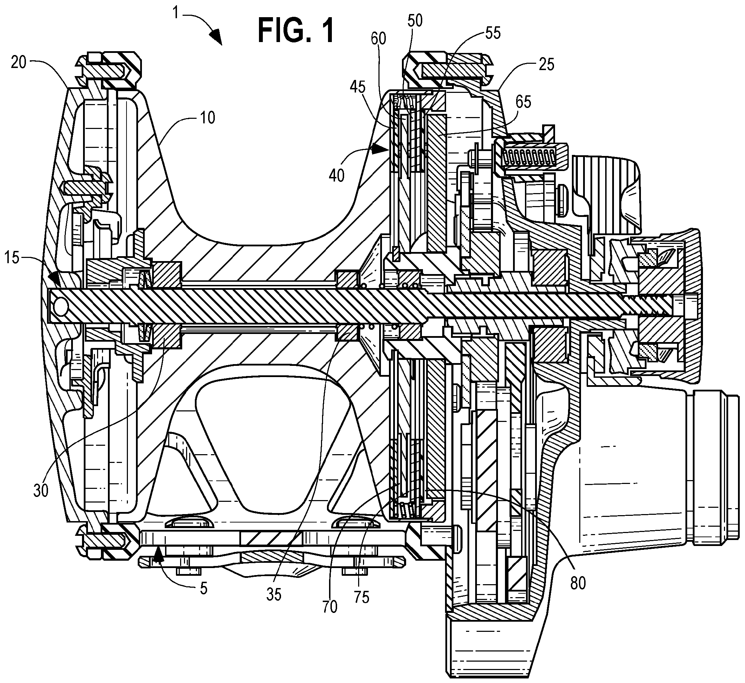

As illustrated in Fig. 1, a fishing reel 1 may include a frame 5 configured to couple with a fishing rod (not illustrated) and a spool 10 rotatably coupled to the frame 5. To retain the spool 10 on the frame 5, the spool 10 may be supported on a shaft 15 which extends from a left side 20 of the frame 5 to a right side 25 of the frame 5. To facilitate rotation of the spool 10, the spool 10 may be coupled to the shaft 15 through a first spool bearing 30 and a second spool bearing 35. The first spool bearing 30 and the second spool bearing 35 may be positioned and located on the shaft 15 proximate the left side 20 and the right side 25 of the frame 5, respectively.

The spool 10 may be designed to receive and retain fishing line on the reel 1. For example, the spool 10 may be substantially cylindrical with an hour-glass shape (i.e., cylindrical with a larger diameter towards the ends than in middle) such that fishing line may be wrapped around the spool 10. When fishing line is wrapped around the spool 10 in a first direction, rotation of the spool 10 in the first direction preferably causes additional fishing line to be wrapped around the spool 10. Thus, the spool 10 may be rotated in the first direction to preferably "reel in" or retract the fishing line.

In contrast, when the spool 10 is rotated in a second direction, opposite the first direction, the fishing line may unwind from the spool 10 such that additional fishing line is preferably released or "let out" from the reel 1. When an angler is casting or otherwise letting out fishing line, the angler may desire for the spool 10 to rotate with a relatively low resistance. To facilitate this, the angler may place a drag mechanism 40 in a disengaged position as illustrated in Fig. 1.

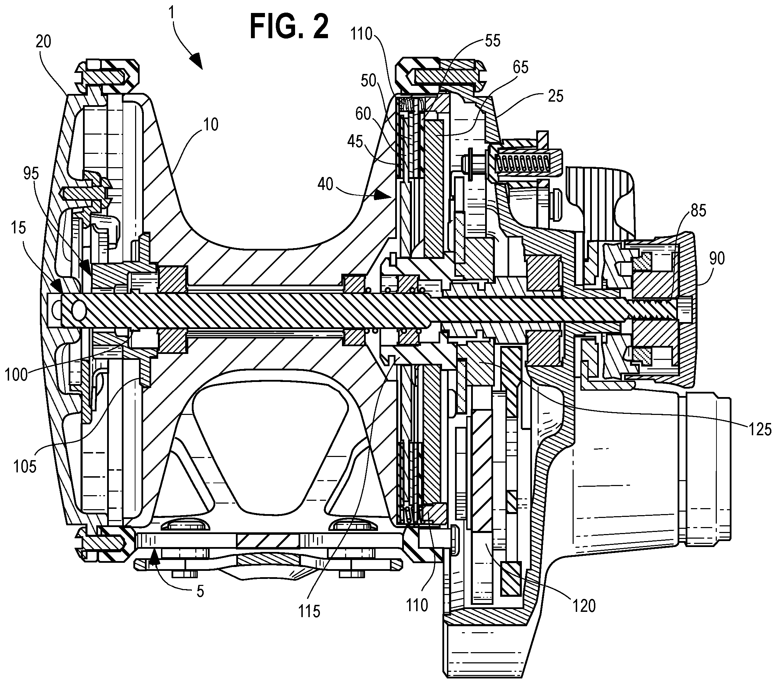

When the drag mechanism 40 is in the disengaged position, the spool 10 will preferably rotate with minimal resistance. For example, the drag mechanism 40 may include an inner drag washer 45, a center drag washer 50, an outer drag washer 55, an inner drag plate 60, and an outer drag plate 65 that are selectively engageable with one another (as will be described in connection with Fig. 2). When the drag mechanism 40 is in the disengaged position, a first gap 70 may be formed between the inner drag washer 45 and the inner drag plate 60. In addition, a second gap 75 may be formed between the inner drag plate 60 and the center drag washer 50. Further, a third gap 80 may be formed between the outer drag washer 55 and the outer drag plate 65. Thus, when the drag mechanism 40 is in the disengaged position, the reel 1 may be in a "free-spool" mode such that the spool 10 rotates with minimal resistance.

Turning to Fig. 2, when an angler has a fish hooked, the angler may desire for the reel 1 to resist rotation of the spool 10 to preferably prevent the release of additional fishing line. To facilitate such arrangement, the angler may place the drag mechanism 40 in the engaged position as illustrated in Fig. 2.

To place the drag mechanism 40 in the engaged position, the angler may rotate a lever (not illustrated) in a first direction to preferably pull or translate the shaft 15 axially outward from the reel 1. The lever may be positioned and located on the right side 25 of the frame 5, although in alternative embodiments, the lever may be positioned and located on the left side 20. More particularly, the lever may be coupled to a first end 85 of the shaft 15. When the lever is rotated backward, the first end 85 of the shaft 15 preferably translates a threshold distance away from the right side 25 of the frame 5. The threshold distance may be adjusted by the angler by rotating a calibration knob 90 threadedly coupled to the first end 85 of the shaft 15.

Translation of the shaft 15 axially outward from the reel 1 preferably results in the spool 10 and a shaft hub 95 translating towards the right side 25. More particularly, a flange 100 on the shaft 15 may engage with the shaft hub 95 to preferably pull the shaft hub 95 towards the right side 25. As the shaft hub 95 moves towards the right side 25, a radial lip 105 on the shaft hub 95 may engage with the spool 10 to preferably cause the spool 10 to also move towards the right side 25.

As further illustrated in Fig. 2, the spool 10 translating towards the right side 25 preferably results in the drag washers 45, 50, 55 being placed into contact with the drag plates 60, 65 to generate a frictional engagement in the drag mechanism 40. In particular, the drag washers 45, 50, 55 and the drag plates 60, 65 may move towards one another such that the gaps 70, 75, 80 (see Fig. 1) may substantially reduce before being eliminated. The drag washers 45, 50, 55 may be ring-shaped, and the drag plates 60, 65 may be disc-shaped (e.g., substantially circular plates), although other configurations are foreseeable. In some embodiments, the drag washers 45, 50, 55 and/or the drag plates 60, 65 may be composed of metal and/or carbon fiber.

More particularly, as the spool 10 translates towards the right side 25, the spool 10 may abut the inner drag washer 45 to preferably cause the inner drag washer 45 to translate towards the right side 25. As a result, the spool 10 may push the inner drag washer 45 such that the inner drag washer 45 is placed into contact with the inner drag plate 60. Moreover, the translation of the spool 10 and the inner drag washer 45 may push or place the inner drag plate 60 into contact with the center drag washer 50. The center drag washer 50 may be coupled to the outer drag washer 55 such that the outer drag washer 55 is preferably pushed or placed into contact with the outer drag plate 65. Accordingly, when the drag mechanism 40 is engaged, friction may be developed between the inner drag washer 45 and the inner drag plate 60, between the inner drag plate 60 and the center drag washer 50, and between the outer drag washer 55 and the outer drag plate 65. Thus, the drag mechanism 40 may preferably generate friction at three interfaces.

The frictional engagement of the drag washers 45, 50, 55 and the drag plates 60, 65 may preferably result in the spool 10 resisting rotation. For example, the drag washers 45, 50, 55 may be coupled to the spool 10 with spool pins 110 such that the drag washers 45, 50, 55 rotate about the shaft 15 with the spool 10. In contrast to the drag washers 45, 50, 55, the drag plates 60, 65 may be coupled to a drag plate hub 115 which may be selectively rotatable about the shaft 15. As a result, when the drag washers 45, 50, 55 are frictionally engaged with the drag plates 60, 65, the spool 10 preferably resists rotation relative to the drag plate hub 115.

When the spool 10 is coupled to the drag plate hub 115 via the drag mechanism 40, a handle (not illustrated) may be used to selectively rotate the drag plate hub 115, and thus, the spool 10. The handle may be rotatably coupled to the frame 5 and may engage with the drag plate hub 115 via gears 120, 125 to cause rotation of the drag plate hub 115. For example, the handle may be coupled to the first gear 120, and the second gear 125 may interface with the first gear 120 and the drag plate hub 115. Thus, the drag plate hub 115 may preferably rotate about the shaft 15 when the handle is rotated.

As a result, when the drag mechanism 40 is engaged, the angler may use the handle to rotate the spool 10 in the first direction to reel in additional fishing line. Additionally, if the angler holds the handle in place, the coupling of the spool 10 and the drag plate hub 115 may help to prevent the spool 10 from rotating and releasing fishing line.

To set the level of drag, the angler may rotate the calibration knob 90 to adjust the threshold distance that the shaft 15 moves in response to rotation of the lever. When the threshold distance is decreased, the shaft 15 translates further towards the right side 25. As a result, the drag washers 45, 50, 55 and the drag plates 60, 65 apply a greater pressure to one another, and a greater level of drag is produced. Thus, the level of drag preferably increases when the calibration knob 90 is rotated to decrease the threshold distance. Conversely, if the calibration knob 90 is rotated to increase the threshold distance, the shaft 15 preferably translates a shorter distance in response to rotation of the lever. Therefore, if the calibration knob 90 is rotated to decrease the threshold distance, the drag mechanism 40 preferably produces a higher level of friction and drag.

If the tension applied to the fishing line exceeds the frictional forces generated between the drag washers 45, 50, 55 and the drag plates 60, 65, the drag mechanism 40 may allow rotation between the drag washers 45, 50, 55 and the drag plates 60, 65. As such, the spool 10 may rotate to release additional fishing line. To help prevent fishing line from breaking, the angler may adjust the calibration knob 90 so that the friction generated in the drag mechanism 40 is less than or equal to the strength of the fishing line. Thus, in response to a tension greater than the strength of the fishing line, the spool 10 may rotate and release additional fishing line to preferably relieve the tension in the fishing line.

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations and other uses and applications of the present constructions will, however, become apparent to those skilled in the art after considering the specification and the accompanying drawings. In addition, unless mention was made above to the contrary, it should be noted that all of the accompanying drawings are not to scale. All such changes, modifications, variations and other uses in applications which do not depart from the spirit and scope of the present inventions are deemed to be covered by the inventions which are limited only by the claims which follow.

## Claims

1. A fishing reel (1) comprising:
a frame (5) ;
a shaft (15) slidably coupled to the frame;
a spool (10) configured to rotate about the shaft;
a first drag washer (45), a second drag washer (50), and a third drag washer (55), wherein each of the first drag washer, the second drag washer, and the third drag washer is coupled to the spool such that the first drag washer, the second drag washer, and the third drag washer rotate with the spool;
a first drag plate (60) and a second drag plate (65), each of the first drag plate and the second drag plate being coupled to the frame;
wherein when the shaft is moved outwardly from the frame, at least one of the first drag washer, the second drag washer, and the third drag washer moves toward at least one of the first drag plate and the second drag plate; and
wherein when the shaft is moved inwardly toward the frame, at least one of the first drag washer, the second drag washer, and the third drag washer moves away from at least one of the first drag plate and the second drag plate.

2. The fishing reel of claim 1, wherein at least one of the first drag washer (45), the second drag washer (50), and the third drag washer (55) is configured to engage with at least one of the first drag plate and the second drag plate to generate friction.

3. The fishing reel of claim 1 or 2, wherein the shaft (15) is coupled to a calibration knob (90) configured to adjust a distance that the shaft moves inwardly or outwardly with respect to the frame.

4. The fishing reel of any of claims 1 to 3, wherein the spool (10) is configured to move toward a first side of the frame (5) when the shaft (10) is moved outwardly from the frame.

5. The fishing reel of any of claims 1 to 4, wherein the first drag washer (45), the second drag washer (50), and the third drag washer (55) are each coupled to the spool (10) via at least one pin.

6. The fishing reel of any of claims 1 to 5, wherein the spool (10) is configured to move at least one of the first drag washer (45), the second drag washer (50), and the third drag washer (55) toward at least one of the first drag plate (60) and the second drag plate (65) when the shaft is moved outwardly from the frame.

7. The fishing reel of any of claims 1 to 6, wherein a resistance applied to the spool (10) is selectively adjustable by moving the shaft inwardly or outwardly from the frame.

8. The fishing reel of any of claims 1 to 7, wherein the first drag washer (45), the second drag washer (50), and the third drag washer (55) are each ring-shaped.

9. The fishing reel of any of claims 1 to 8, further including:
a hub (115) coupled to the first drag plate (60) and the second drag plate (65) such that the hub rotates with the first drag plate and the second drag plate; and
a handle configured to selectively rotate the hub,
wherein, optionally, the handle is configured to rotate the spool (10) when at least one of the first drag plate (60) and the second drag plate (65) is engaged with at least one of the first drag washer (45), the second drag washer (50), and the third drag washer (55).

10. A fishing reel (1) including:
a frame (5);
a shaft (15) coupled to the frame;
a spool configured to rotate about the shaft;
a first drag washer (45), a second drag washer (50), and a third drag washer (55), wherein each of the first drag washer, the second drag washer, and the third drag washer is coupled to the spool such that the first drag washer, the second drag washer, and the third drag washer rotate with the spool;
a first drag plate (60) and a second drag plate (65), each of the first drag plate and the second drag plate being configured to engage with at least one of the first drag washer, the second drag washer, and the third drag washer;
wherein when the fishing reel is in a first position, the first drag plate engages with each of the first drag washer and the second drag washer, and the second drag plate engages with the third drag washer; and
wherein when the fishing reel is in a second position, a gap is formed between at least one of the first drag washer, the second drag washer, and third drag washer and at least one of the first drag plate and the second drag plate.

11. The fishing reel of claim 10, wherein at least one of the first drag plate and the second drag plate is configured to move when the fishing reel transitions from the first position to the second position, wherein, optionally, the fishing reel (1) transitions from the first position to the second position when the shaft is moved inwardly toward the frame.

12. The fishing reel of claim 10 or 11, further including a calibration knob (90) configured to adjust a clamping pressure between the first drag washer (45), the second drag washer (50), and the third drag washer (55) and the first drag plate (60) and the second drag plate (65).

13. The fishing reel of any of claims 10 to 12, wherein the first drag washer (45), the second drag washer (50), and the third drag washer (55) are each composed at least partially of carbon fiber.

14. The fishing reel of any of claims 10 to 13, further including a handle for selectively rotating the first drag plate (60) and the second drag plate (65), wherein, optionally, the handle is configured to rotate the spool (10) when the fishing reel (1) is in the first position.

15. The fishing reel of any of claims 10 to 14, wherein the fishing reel (1) is configured to generate more resistance against rotation of the spool (10) when the fishing reel is in the first position than when the fishing reel is in the second position.

16. The fishing reel of any of claims 10 to 15, wherein the spool (10) moves in an axial direction when the fishing reel transitions from the first position to the second position, wherein, optionally, the spool (10) moves at least one of the first drag washer, the second drag washer, and the third drag washer and at least one of the first drag plate and the second drag plate when the fishing reel transitions from the first position to the second position.
